# EUROPEAN PATENT APPLICATION

(11) **EP 4 749 736 A1**
(43) Date of publication of application: **27.05.2026**
(21) Application number: 25217038.6
(22) Date of filing: 19.11.2025
(51) Int. Cl.: H01M 10/04, H01M 50/209

(54) **METHOD AND APPARATUS FOR COMPRESSING STACKED CELLS**

(30) Priority: 20.11.2024 KR 20240166573
(71) Applicant: SAMSUNG SDI CO., LTD., Yongin-si, Gyeonggi-do 17084 (KR)
(72) Inventor: KU, BonJae, 17084 Yongin-si (KR)
(74) Representative: Marks & Clerk LLP

(57) **Abstract**

A method and apparatus for compressing stacked cells (SC) are described. The method of compressing stacked cells includes a relative position correction operation of correcting a relative position of a workpiece carrier (310) that has entered, a high-speed movement operation of moving a compression block (350) at a first speed after stacked cells are seated inside the workpiece carrier, a medium-speed movement operation of moving the compression block at a second speed lower than the first speed to a start point of compression, and a low-speed movement operation of moving the compression block at a third speed lower than the second speed to a target compression distance.

## Description

### BACKGROUND

### 1. Technical Field

The present disclosure relates to a method and apparatus for compressing stacked cells.

### 2. Related Art

Unlike primary batteries that cannot be charged, secondary batteries are batteries that can be charged and discharged. Low-capacity batteries are used in small, portable electronics such as smartphones, feature phones, notebook computers, digital cameras, and camcorders, while high-capacity batteries are widely used as power sources for motors in hybrid and electric vehicles and for power storage. A secondary battery may broadly include an electrode assembly consisting of a positive electrode plate, and a negative electrode plate, a case for accommodating the electrode assembly, and an external terminal connected to the electrode assembly.

A process for production of electric vehicle battery modules requires mechanical stability and precision in external dimensions of products. In a process of stacking and modularizing cells in accordance with the requirements of battery packs mounted on electric vehicles, rigid plates need to be assembled on the outer side of products to stably maintain the external appearance of the stacked cells. However, if the stacked cells are greatly changed in external dimension, the assembly rigidity of the plates may not be maintained consistently, which leads to deterioration in functionality and risk of fire while the electric vehicles are traveling.

The above information disclosed in this Background section is for enhancement of understanding of the background of the present disclosure, and therefore, it may contain information that does not constitute a prior art.

### SUMMARY

Accordingly, an object of the present disclosure is to propose a method and apparatus capable of precisely controlling external dimensions of stacked cells.

Another object of the present disclosure is to propose a method and apparatus capable of compressing stacked cells to effectively and precisely control external dimensions thereof during a process of battery module production.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

In accordance with an aspect of the present disclosure, there is provided a method of compressing stacked cells, which includes a relative position correction operation of correcting a relative position of a workpiece carrier that has entered, a high-speed movement operation of moving a compression block at a first speed after stacked cells are seated inside the workpiece carrier, a medium-speed movement operation of moving the compression block at a second speed lower than the first speed to a start point of compression, and a low-speed movement operation of moving the compression block at a third speed lower than the second speed to a target compression distance.

The relative position correction operation may be performed to correct the relative position of the entered workpiece carrier by measuring a distance of the entered workpiece carrier to the compression block using a front laser sensor and measuring a distance of the entered workpiece carrier to a fixed block using a rear laser sensor.

Whether the compression block has reached the start point of compression or the target compression distance may be determined based on the distance to the compression block measured by the front laser sensor and the corrected value.

The high-speed movement operation may include seating the stacked cells inside the workpiece carrier, and moving the compression block at the first speed to a predetermined position. The predetermined position may be a position immediately before the compression block touches the stacked cells.

The medium-speed movement operation may include inserting a pin as a bushing into a plate that determines the outer side of the stacked cells, and moving the compression block at the second speed to the start point of compression after inserting the pin.

The low-speed movement operation may include moving the compression block at the third speed, and stopping the compression block when the compression block reaches the target compression distance which is a target overall length of the stacked cells.

The low-speed movement operation may further include keeping the compression block stopped at the target compression distance for a predetermined stabilization time after stopping the compression block.

The low-speed movement operation may further include measuring a horizontal compression force while moving the compression block at the third speed.

In accordance with another aspect of the present disclosure, there is provided an apparatus for compressing stacked cells, which includes a workpiece carrier configured to transport stacked battery cells, a compression block and fixed block configured to compress the stacked cells on the workpiece carrier, a nut runner configured to move the compression block, and a front laser sensor configured to measure a distance to the compression block. The apparatus is adapted to move the compression block at a predetermined speed to a start point of compression, and then to move the compression block at a speed lower than the predetermined speed to a target compression distance.

The apparatus may further include a rear laser sensor configured to measure a distance to the fixed block. The apparatus may be adapted to correct a relative position of the workpiece carrier that has entered by measuring the distance of the entered workpiece carrier to the compression block using the front laser sensor and measuring the distance of the entered workpiece carrier to the fixed block using the rear laser sensor.

Whether the compression block has reached the start point of compression or the target compression distance may be determined based on the distance to the compression block measured by the front laser sensor and the corrected value.

The apparatus may be adapted to seat the stacked cells inside the workpiece carrier that has entered and move the compression block at a speed higher than the predetermined speed to a predetermined position. The predetermined position may be a position immediately before the compression block touches the stacked cells.

The apparatus may be adapted to insert a pin as a bushing into a plate that determines the outer side of the stacked cells before moving the compression block at the predetermined speed to the start point of compression.

Moving the compression block at the speed lower than the predetermined speed to the target compression distance may be to move the compression block at the speed lower than the predetermined speed and stop the compression block when the compression block reaches the target compression distance which is a target overall length of the stacked cells.

The apparatus may be adapted to keep the compression block stopped at the target compression distance for a predetermined stabilization time after stopping the compression block.

The apparatus may further include a means for measuring a horizontal compression force while moving the compression block at the speed lower than the predetermined speed.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to this specification illustrate preferred embodiments of the present disclosure, and help to further understand the technical scope of the present disclosure along with the aforementioned contents of the disclosure. Accordingly, the present disclosure should not be construed as being limited to only contents described in such drawings:
FIG. 1 is a perspective view of a prismatic battery according to an embodiment of the present disclosure;
FIG. 2 is a cross-sectional view of a prismatic battery according to an embodiment of the present disclosure;
FIG. 3 is a perspective view of a battery module according to an embodiment of the present disclosure;
FIG. 4 is a conceptual diagram for explaining a stacked-cell compression process according to an embodiment of the present disclosure;
FIG. 5 is a flow diagram illustrating a flow of operation of the stacked-cell compression process according to the embodiment of the present disclosure;
FIG. 6 illustrates a state in a high-speed movement step;
FIG. 7 illustrates a state in a medium-speed movement step; and
FIG. 8 illustrates a state in a low-speed movement step.

### DETAILED DESCRIPTION

Example embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the scope of the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

### [Prismatic Battery]

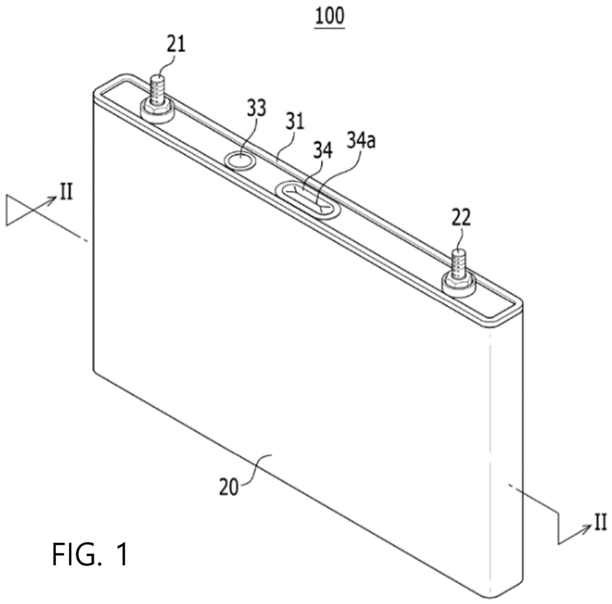

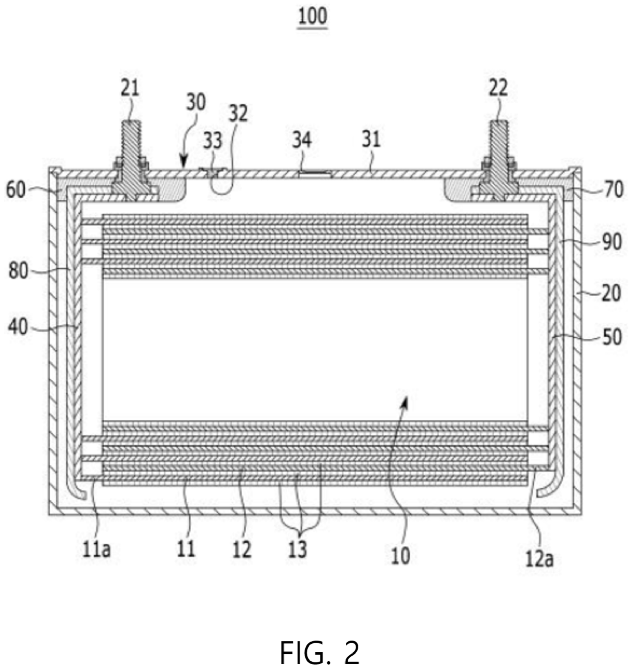

FIG. 1 is a perspective view illustrating a secondary battery 100 according to one or more embodiments of the present disclosure, and FIG. 2 is a cross-sectional view taken along the line II-II in FIG. 1.

Referring to FIGS. 1 and 2, the secondary battery 100 according to one or more embodiments of the present disclosure may include at least one electrode assembly 10 wound with a separator 13 as an insulator between the positive electrode 11 and the negative electrode 12, a case 20 in which the electrode assembly 10 is received (or accommodated) therein, and a cap assembly 30 coupled to an opening of the case 20.

The secondary battery 100 according to one or more embodiments illustrated in FIGS. 1 and 2 will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode 11 and the negative electrode 12 may include a current collector made of a thin metal foil having a coated portion on which an active material is coated and an uncoated portion 11a, 12a on which an active material is not coated.

The positive electrode 11 and the negative electrode 12 are wound after interposing the separator 13, which is an insulator, therebetween. However, the present disclosure is not limited thereto, and the electrode assembly 10 may have a structure in which a positive electrode 11 and a negative electrode 12, each made of a plurality of sheets, are alternately stacked with a separator interposed therebetween.

The case 20 may form the overall outer appearance of the secondary battery 100 and may be made of a conductive metal, such as aluminum, aluminum alloy, or nickel-plated steel. In addition, the case 20 may provide a space in which the electrode assembly 10 is accommodated.

The cap assembly 30 may include a cap plate 31 covering an opening in the case 20, and the case 20 and the cap plate 31 may be made of a conductive material. The positive and negative electrode terminals 21, 22 electrically connected to the positive electrode 11 and the negative electrode 12, respectively, may be installed to penetrate (or extend through) the cap plate 31 and protrude outwardly therethrough.

In addition, outer peripheral surfaces (e.g., circumferential surfaces) of upper pillars of the positive and negative electrode terminals 21, 22 protruding outwardly from the cap plate 31 may be threaded and may be fixed to the cap plate 31 by utilizing nuts.

However, the present disclosure is not limited thereto, and the positive and negative electrode terminals 21, 22 may have a rivet structure and may be riveted or welded to the cap plate 31.

In addition, the cap plate 31 may be made of a thin plate and may be coupled to the opening in the case 20, and an electrolyte injection port 32 into which a sealing stopper 33 may be installed may be located (e.g., formed) in the cap plate 31, and a vent portion 34 having a notch 34a may be installed.

The positive and negative electrode terminals 21, 22 may be electrically connected to current collectors including first and second current collectors 40 and 50 (hereinafter referred to as positive and negative current collectors) by being bonded or coupled (e.g., by welding) to the positive uncoated portion 11a and the negative electrode uncoated portion 12a, respectively.

For example, the positive and negative electrode terminals 21, 22 may be coupled by welding to the positive and negative electrode current collectors 40, 50, respectively. However, the present disclosure is not limited thereto, and the positive and negative electrode terminals 21, 22 and the positive and negative electrode current collectors 40, 50 may be integrally formed in one or more embodiments.

In addition, an insulation member may be installed between the electrode assembly 10 and the cap plate 31. The insulation member may include first and second lower insulation members 60, 70, and each of the first and second lower insulation members 60, 70 may also have a portion located between the electrode assembly 10 and the case 20.

In addition, according to one or more embodiments of the present disclosure, one end of a separation member may face one side of the electrode assembly 10 and may be installed between the insulation member and the positive or negative electrode terminals 21, 22.

In one or more embodiments, the separation member may include first and second separation members 80, 90.

In such an embodiment, first ends of the first and second separation members 80, 90 installed to face one side of the electrode assembly 10 may be respectively installed between the first and second lower insulation members 60, 70 and the positive and negative electrode terminals 21, 22.

Accordingly, the positive and negative electrode terminals 21, 22, which may be coupled by welding to the positive and negative electrode current collectors 40, 50, may be coupled to first ends of the first and second lower insulation members 60, 70 and the first and second separation members 80, 90.

### [Battery Module]

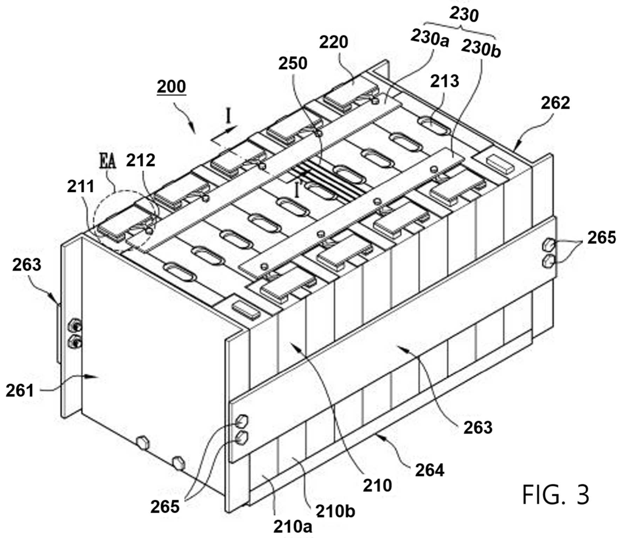

FIG. 3 is a perspective view illustrating a battery module 200 according to one or more embodiments of the present disclosure.

Referring to FIG. 3, the battery module 200 according to one or more embodiments of the present disclosure includes electrode units 211, 212, a plurality of battery cells 210 arranged in one direction, a connection tab 220 connecting a battery cell 210a of the battery cells 210 to an adjacent battery cell 210b of the battery cells 210, and a protection circuit module 230 having one end connected to the connection tab 220. The protection circuit module 230 may include a battery management system (BMS). Further, the connection tab 220 may include a body portion in contact with the electrode units 211, 212 between the adjacent battery cells 210a, 210b and an extension portion extending from the body portion and connected to the protection circuit module 230. The connection tab 20 may be, for example, a bus bar.

Each battery cell 210 may include a battery case, an electrode assembly received (or accommodated) in the battery case, and an electrolyte. The electrode assembly and the electrolyte react electrochemically to store and release (e.g., generate) energy. Terminal parts 211, 212 electrically connected to the connection tab 220 and a vent 213 as a discharge passage for gas generated inside the battery case 20 may be provided on one side of (e.g., an upper side of) the battery cell 210. The terminal parts 211, 212 of the battery cell 210 may be a positive electrode terminal 211 and a negative electrode terminal 212 having different polarities from each other, and the terminal parts 211, 212 of the adjacent battery cells 210a, 210b may be electrically connected to each other in series or parallel by the connection tab 220, to be described in more detail below. Although a serial connection has been described as an example, the connection structure is not limited thereto, and various connection structures may be employed as desired or necessary. In addition, the number and arrangement of battery cells is not limited to the structure shown in FIG. 3 and may be changed as desired or necessary.

The plurality of battery cells 210 may be arranged in (e.g., may be stacked in) one direction so that the wide surfaces of the battery cells 210 face each other, and the plurality of battery cells 210 may be fixed by the housings. The housings may include a pair of end plates 261, 262 facing the wide surfaces of the battery cell 210 and a side plate 263 and a bottom plate 264 connecting the pair of end plates 261, 262 to each other. The side plate 263 may support side surfaces of the battery cells 210, and the bottom plate 264 may support bottom surfaces of the battery cells 210. In addition, the pair of end plates 261 and 262, the side plate 263 and the bottom plate 264 may be connected by bolts 265 and/or any other suitable fastening members and methods known to those of ordinary skill in the art.

The protection circuit module 230 may have electronic components and protection circuits mounted thereon and may be electrically connected to connection tabs 220, to be described in more detail later. The protection circuit module 230 includes a first protection circuit module 230a and a second protection circuit module 230b extending along the direction in which the plurality of battery cells 210 are arranged in different locations. The first protection circuit module 230a and the second protection circuit module 230b may be spaced from each other at a suitable interval (e.g., a predetermined interval) and arranged parallel to each other to be electrically connected to adjacent connection tabs 220, respectively. For example, the first protection circuit module 230a extends on one side of the upper portion of the plurality of battery cells 210 along the direction in which the plurality of battery cells 210 are arranged, and the second protection circuit module 230b extends to the other upper side of the plurality of battery cells 210 along the direction in which the plurality of battery cells 210 are arranged. The second protection circuit module 230b may be spaced from the first protection circuit module 230a at a suitable interval (e.g., a predetermined interval) with the vents 213 interposed therebetween but may be disposed parallel to the first protection circuit module 230a. As such, the two protection circuit modules are spaced from each other side-by-side along the direction in which the plurality of battery cells 210 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 230a and the second protection circuit module 230b may be connected to each other by a conductive connection member 250. One side of the conductive connection member 250 is connected to the first protection circuit module 230a, and the other side thereof is connected to the second protection circuit module 230b so that the two protection circuit modules 230a, 230b can be electrically connected with each other.

The connection may be performed by any one of soldering, resistance welding, laser welding, projection welding and/or any other suitable connection methods known to those of ordinary skill in the art.

In addition, the connection member 250 may be, for example, an electric wire. In addition, the connection member 250 may be made of a material having elasticity or flexibility. By the connecting member 250, it may be possible to check and manage whether the voltage, temperature, and/or current of the plurality of battery cells 210 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 250.

In addition, when the battery cell 210 swells, shocks may be absorbed by the elasticity or flexibility of the connection member 250, thereby preventing the first and second protection circuit modules 230a, 230b from being damaged.

In addition, the shape and structure of the connection member 250 is not limited to the shape and structure shown in FIG. 3.

As described above, because the protection circuit module 230 is provided as the first and second protection circuit modules 230a and 230b, the area of the PCB constituting the protection circuit module can be reduced or minimized, and the space inside the battery module can be secured, which improves work efficiency by facilitating a fastening work for connecting the connection tab 220 and the protection circuit module 230 and repair work if (or when) an abnormality is detected in the battery module.

### [Stacked-Cell Compression Process]

In the present disclosure, it is proposed to compress stacked cells to precisely control the external dimensions of the stacked cells in a process of battery module production. For this purpose, a laser displacement sensor is used to track a compression distance in real time in a stacked-cell compression process. A compression speed is controlled in three stages (high/medium/low) for each section of the compression distance. Accordingly, it is possible to precisely control the degree of quality while satisfying the cycle time of the process.

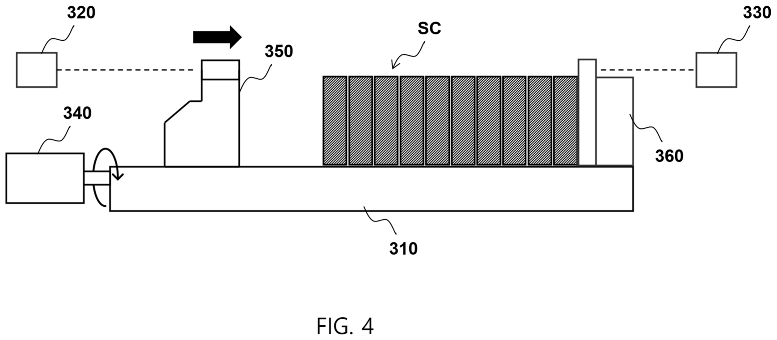

A stacked-cell compression process according to an embodiment of the present disclosure will be described in detail with reference to the drawings. FIG. 4 is a conceptual diagram for explaining the stacked-cell compression process according to the embodiment of the present disclosure.

In the embodiment of FIG. 4, an apparatus for compressing stacked cells according to the present disclosure includes a workpiece carrier 310 specially manufactured to transport stacked battery cells SC, a compression block 350 and a fixed block 360 for compressing the stacked cells SC on the workpiece carrier 310, a nut runner 340 for moving the compression block 350, a front laser sensor 320 for measuring a distance to the compression block 350, and a rear laser sensor 330 for measuring a distance to the fixed block 360.

The fixed block 360 is fixed on the workpiece carrier 310, and the compression block 350 is movable from side to side on the workpiece carrier 310. The workpiece carrier 310 includes a ball screw, and the ball screw is rotated along with the rotation of the nut runner 340, which causes the compression block 350 to move linearly. The compression block 350 moves at high speed to a predetermined position. The predetermined position to which the compression block 350 moves at high speed may be a position immediately before the compression block 350 touches the stacked cells SC. At this position, a pin is inserted as a bushing into a plate that determines the outer side of the stacked cells SC and the compression block 350 moves at a medium speed lower than the high speed to a start point of compression.

From the start point of compression, the compression block 350 moves at a low speed lower than the medium speed. The compression block 350 applies a compression force to the stacked cells SC while moving at low speed. As the stacked cells SC are pushed toward the fixed block 360, the overall length (external dimensions) of the stacked cells SC is reduced. When the compression block 350 reaches a target compression distance, which is the target overall length of the stacked cells SC, the compression block 350 is stopped. In some embodiments, a predetermined stabilization time may be set after the compression block 350 reaches the target compression distance. For example, the compression block 350 may remain stationary at the target compression distance for 3 seconds.

In some embodiments, the compression force (kgf) applied horizontally to the stacked cells SC by the compression block 350 in a low-speed movement step may be measured. For this purpose, the apparatus may further include a means for measuring a horizontal compression force while moving the compression block 350 at low speed.

The front laser sensor 320 measures the distance of the entered workpiece carrier 310 to the compression block 350, and the rear laser sensor 330 measures the distance of the entered workpiece carrier 310 to the fixed block 360. The front laser sensor 320 and the rear laser sensor 330, which are installed at fixed positions, are used to correct the relative position between fixed equipment and the workpiece carrier 310 entering the stacked-cell compression process. In other words, whenever the workpiece carrier 310 enters, the difference between the value measured by the front laser sensor 320 and the value measured by the rear laser sensor 330 is determined as an amount of dispersion and calculated as an offset for measurement.

The front laser sensor 320 is also used to identify the current position of the compression block 350 when the compression block 350 moves and to determine whether to move the compression block 350 at high speed, at medium speed or at low speed. In other words, the front laser sensor 320 is used to determine whether the compression block 350 has reached the predetermined position, the start point of compression or the target compression distance.

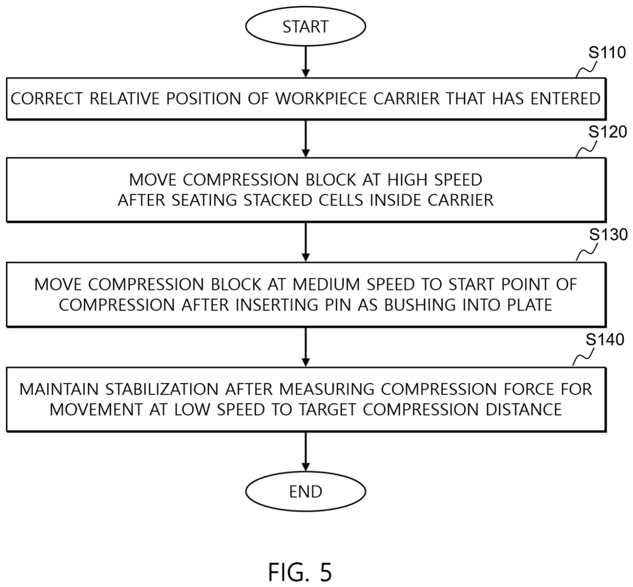

FIG. 5 is a flow diagram illustrating a flow of operation of the stacked-cell compression process according to the embodiment of the present disclosure.

The stacked-cell compression process of FIG. 5 includes a relative position correction step S110 of correcting the relative position of the workpiece carrier 310 that has entered, a high-speed movement step S120 of moving the compression block 350 at high speed after the stacked cells SC are seated inside the workpiece carrier 310, a medium-speed movement step S130 of moving the compression block 350 at a medium speed lower than the high speed to a start point of compression, and a low-speed movement step S140 of moving the compression block 350 at a low speed lower than the medium speed to a target compression distance while adjusting a compression force.

When the workpiece carrier 310, which is empty, enters, the apparatus for compressing stacked cells corrects the relative position between the fixed equipment and the workpiece carrier 310 (S110). In other words, since the relative position between the entering workpiece carrier 310 and the fixed equipment may be changed, this relative position is corrected to improve precision in subsequent steps. For this purpose, whenever the workpiece carrier 310 enters, the difference between the value measured by the front laser sensor 320 and the value measured by the rear laser sensor 330 may be determined as an amount of dispersion and calculated as an offset for measurement.

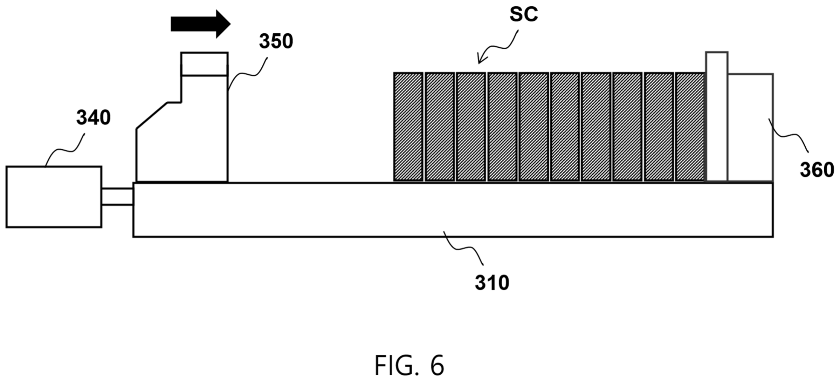

Next, after the stacked cells SC are seated inside the workpiece carrier 310, the compression block 350 moves at high speed to a predetermined position (S120). The state at this time is illustrated in FIG. 6. The predetermined position may be a position immediately before the compression block 350 touches the stacked cells SC. While the compression block 350 moves at high speed, the front laser sensor 320 continues to measure the distance to the compression block 350 and continues to identify the position of the compression block 350 on the workpiece carrier 310 based on the measured value and the value corrected in step S110. This makes it possible to determine whether the compression block 350 has reached the predetermined position.

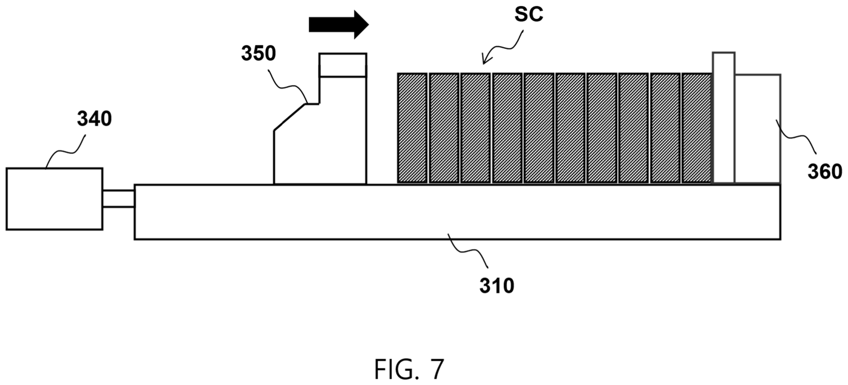

When the compression block 350 reaches the predetermined position at high speed, the compression block 350 is stopped and the pin is inserted as a bushing into the plate that determines the outer side of the stacked cells SC in step S130. After insertion of the pin, the compression block 350 moves at medium speed to the start point of compression. The state at this time is illustrated in FIG. 7. Even in step S120, the front laser sensor 320 continues to measure the distance to the compression block 350 and continues to identify the position of the compression block 350 on the workpiece carrier 310 based on the measured value and the value corrected in step S110. This makes it possible to determine whether the compression block 350 has reached the start point of compression. From step S130, a speed is set in consideration of positional distortion due to external disturbances such as vibration.

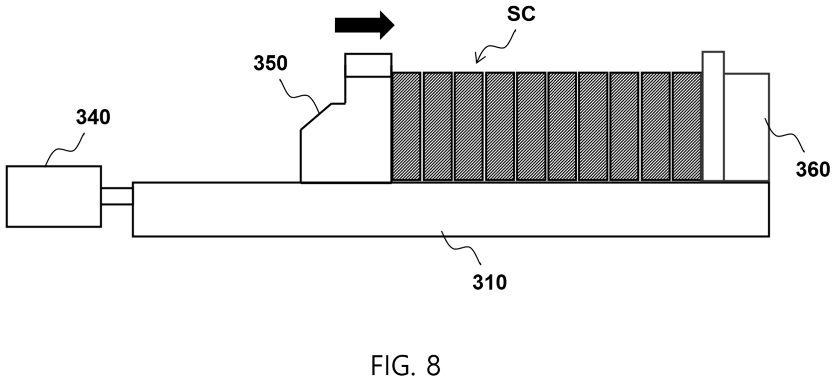

From the start point of compression, the compression block 350 moves at low speed (S140). The state at this time is illustrated in FIG. 8. The compression block 350 applies a compression force to the stacked cells SC while moving at low speed. As the stacked cells SC are pushed toward the fixed block 360, the overall length (external dimensions) of the stacked cells SC is reduced. In the low-speed movement step, a horizontal compression force (kgf) may be measured to ensure compression within a range that does not affect the design performance of the secondary battery cell. When the compression block 350 reaches a target compression distance, which is the target overall length of the stacked cells SC, the compression block 350 is stopped. While the compression block 350 moves at low speed, the front laser sensor 320 continues to measure the distance to the compression block 350 and continues to identify the position of the compression block 350 on the workpiece carrier 310 based on the measured value and the value corrected in step S110. This makes it possible to determine whether the compression block 350 has reached the target compression distance. In some embodiments, a predetermined stabilization time may be set after the compression block 350 reaches the target compression distance. For example, the compression block 350 may remain stationary at the target compression distance for 3 seconds.

As is apparent from the above description, according to the present disclosure, it is possible to precisely control the external dimensions of cells in the process of stacking them.

In addition, according to the present disclosure, since the variation in external dimension of the stacked cells may be minimized, it is advantageous for assembly and processing in subsequent processes. Furthermore, since the variation in external dimension of the stacked cells is small, it is possible to reduce the possibility of deterioration in functionality and risk of fire while the electric vehicles are traveling.

However, effects of the present disclosure which may be obtained in the present disclosure are not limited to the aforementioned effects, and other effects not described above may be evidently understood by those skilled in the art from the following description.

## Claims

1. A method of compressing stacked cells, comprising:
a relative position correction operation of correcting a relative position of a workpiece carrier that has entered;
a high-speed movement operation of moving a compression block at a first speed after stacked cells are seated inside the workpiece carrier;
a medium-speed movement operation of moving the compression block at a second speed lower than the first speed to a start point of compression; and
a low-speed movement operation of moving the compression block at a third speed lower than the second speed to a target compression distance.

2. The method as claimed in claim 1, wherein the relative position correction operation is performed to correct the relative position of the entered workpiece carrier by measuring a distance of the entered workpiece carrier to the compression block using a front laser sensor and measuring a distance of the entered workpiece carrier to a fixed block using a rear laser sensor.

3. The method as claimed in claim 2, wherein whether the compression block has reached the start point of compression or the target compression distance is determined based on the distance to the compression block measured by the front laser sensor and the corrected value.

4. The method as claimed in claim 1, 2 or 3, wherein the high-speed movement operation comprises:
seating the stacked cells inside the workpiece carrier; and
moving the compression block at the first speed to a predetermined position,
and wherein optionally the predetermined position is a position immediately before the compression block touches the stacked cells.

5. The method as claimed in any preceding claim, wherein the medium-speed movement operation comprises:
inserting a pin as a bushing into a plate that determines the outer side of the stacked cells; and
moving the compression block at the second speed to the start point of compression after inserting the pin.

6. The method as claimed in any preceding claim, wherein the low-speed movement operation comprises:
moving the compression block at the third speed; and
stopping the compression block when the compression block reaches the target compression distance which is a target overall length of the stacked cells.

7. The method as claimed in claim 7, wherein the low-speed movement operation further comprises keeping the compression block stopped at the target compression distance for a predetermined stabilization time after stopping the compression block.

8. The method as claimed in claim 6 or 7, wherein the low-speed movement operation further comprises measuring a horizontal compression force while moving the compression block at the third speed.

9. An apparatus for compressing stacked cells, comprising:
a workpiece carrier configured to transport stacked battery cells;
a compression block and fixed block configured to compress the stacked cells on the workpiece carrier;
a nut runner configured to move the compression block; and
a front laser sensor configured to measure a distance to the compression block,
wherein the apparatus is adapted to move the compression block at a predetermined speed to a start point of compression, and then to move the compression block at a speed lower than the predetermined speed to a target compression distance.

10. The apparatus as claimed in claim 9, further comprising a rear laser sensor configured to measure a distance to the fixed block,
wherein the apparatus is adapted to correct a relative position of the workpiece carrier that has entered by measuring the distance of the entered workpiece carrier to the compression block using the front laser sensor and measuring the distance of the entered workpiece carrier to the fixed block using the rear laser sensor.

11. The apparatus as claimed in claim 10, wherein whether the compression block has reached the start point of compression or the target compression distance is determined based on the distance to the compression block measured by the front laser sensor and the corrected value.

12. The apparatus as claimed in claim 9, 10 or 11, wherein the apparatus is adapted to seat the stacked cells inside the workpiece carrier that has entered and move the compression block at a speed higher than the predetermined speed to a predetermined position,
and wherein optionally the predetermined position is a position immediately before the compression block touches the stacked cells.

13. The apparatus as claimed in any one of claims 9 to 12, wherein the apparatus is adapted to insert a pin as a bushing into a plate that determines the outer side of the stacked cells before moving the compression block at the predetermined speed to the start point of compression.

14. The apparatus as claimed in any one of claims 9 to 13, wherein moving the compression block at the speed lower than the predetermined speed to the target compression distance is to move the compression block at the speed lower than the predetermined speed and stop the compression block when the compression block reaches the target compression distance which is a target overall length of the stacked cells,
and wherein optionally the apparatus is adapted to keep the compression block stopped at the target compression distance for a predetermined stabilization time after stopping the compression block.

15. The apparatus as claimed in claim 14, further comprising a means for measuring a horizontal compression force while moving the compression block at the speed lower than the predetermined speed.
